# EUROPEAN PATENT APPLICATION

(11) **EP 4 718 471 A1**
(43) Date of publication of application: **01.04.2026**
(21) Application number: 24810908.4
(22) Date of filing: 09.05.2024
(51) Int. Cl.: G21C 13/00, G21C 13/093

(54) **NUCLEAR POWER PLANT**

(30) Priority: 22.05.2023 JP 2023083729
(71) Applicant: Sato, Takashi, Yokohama-shi Kanagawa 236-0057 (JP)
(72) Inventor: Sato, Takashi, Yokohama-shi Kanagawa 236-0057 (JP)
(74) Representative: You Patent
(86) International application number: PCT/JP2024/017309
(87) International publication number: WO 2024/241900

(57) **Abstract**

According to an embodiment, a nuclear plant has: a plurality of inner shell radial rebars 27 that are arranged at least partially in a base slab 26 of a double shell containment vessel 20, arranged radially having a center line of the base slab as a center of radiation angle, and penetrate an inner shell base part 21a; a plurality of outer shell radial rebars 28 that are arranged radially having the center line of the base slab as a center of radiation angle, and penetrate the outer shell base part 22a; and a plurality of common radial rebars 29 that penetrate both the inner shell base part 21a and the outer shell base part 22a, being a part of the inner shell radial rebars 27 and also a part of the outer shell radial rebars 28, wherein the number of the outer shell radial rebars 28 is larger than the number of the inner shell radial rebars 27; and the maximum number of the common radial rebars 29 is equal to the greatest common divisor of the number of the inner shell radial rebars 27 and the number of the outer shell radial rebars 28.

## Description

### FIELD

The embodiments of the present invention relate to a nuclear plant having a double shell containment made of reinforced concrete.

### BACKGROUND

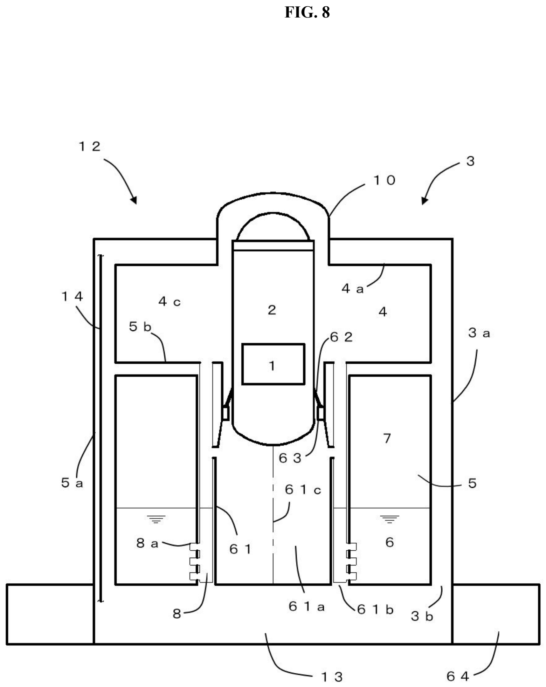

An outline of a reinforced concrete containment of a conventional nuclear power plant will be described with reference to FIGS. 8 to 17.

### <Explanation Relating to FIG. 8: a First Conventional Nuclear Power Plant>

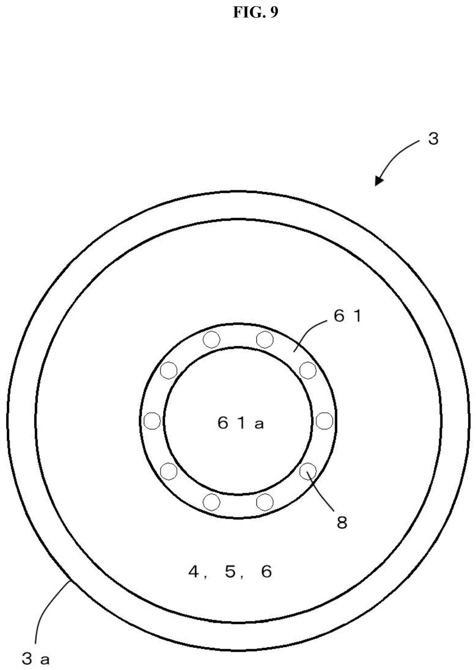

FIG. 8 is a sectional elevational view showing an example of a configuration around a containment vessel of a first conventional nuclear power plant. In FIG. 8, a core 1 is contained in a reactor pressure vessel 2. The reactor pressure vessel 2 is contained in a containment vessel 3. The containment vessel 3 has a cylindrical shape (See FIG. 9). This containment vessel 3 is adopted by an Advanced Boiling Water Reactor (ABWR). The containment vessel 3 is made of reinforced concrete and called also a reinforced concrete containment vessel (RCCV) 12. The inner surface of the RCCV 12 is lined with a steel liner (not shown). A base slab 13 made of reinforced concrete is arranged in a base part of the containment vessel 3 (RCCV 12). The base slab 13 constitutes a part of the containment vessel 3. A steel liner (not shown) is lined on the upper surface of the base slab 13. A base mat 64 of a reactor building (not shown) is arranged around the base slab 13. The base slab 13 is connected with the base mat 64. The base mat 64 is also made of reinforced concrete.

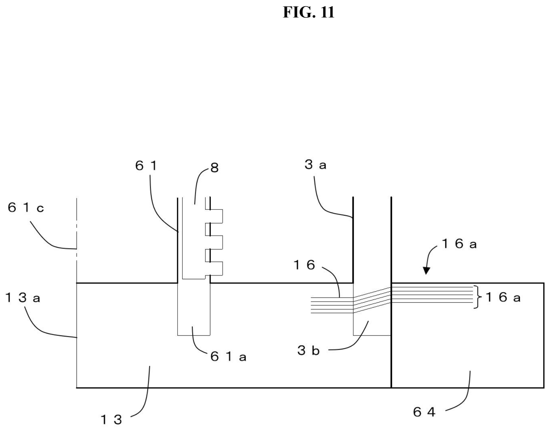

The interior space in the containment vessel 3 is partitioned into a dry well 4, which contains the reactor pressure vessel 2, and a wet well 5. The dry well 4 and the wet well 5 each constitutes a part of the containment vessel 3. The wet well 5 forms a suppression pool 6 inside. A wet well gas phase 7 is formed above the suppression pool 6. The outer wall parts of the dry well 4 and the wet well 5 are integrated to constitute an outer wall (a cylindrical wall) 3a of the containment vessel 3 (See Fig. 9). The inner diameter of the cylindrical wall 3a is about 29 m. The cylindrical wall 3a is connected to the base slab 13 at a cylindrical wall base part 3b (See Fig. 11). The ceiling part of the dry well 4 is a flat plate, which will be referred to as a top slab 4a of the dry well 4.

The reactor pressure vessel 2 is supported by a cylindrical pedestal 61 via an RPV skirt 62 and an RPV support 63. The pedestal 61 is a composite structure made of steel plates and concrete. In the dry well 4, the inside space of the pedestal 61 which is surrounded by the cylindrical wall of the pedestal 61 and below the reactor pressure vessel 2 is referred to as a pedestal cavity 61a. In the case of the RCCV 12 of an ABWR, the space is referred to as a lower dry well in particular. In the case of the RCCV 12 of an ABWR, the cylindrical wall of the pedestal 61 forms a boundary wall between the wet well 5 and the dry well 4.

In the case of the RCCV12 of an ABWR, the inside space of the dry well 4 above the RPV skirt 62 is referred to as an upper dry well 4c. The ceiling of the wet well 5 is a flat plate and constitutes the boundary between the wet well 5 and the upper dry well 4c. This part also constitutes a floor of the upper dry well 4c and is referred to as a diaphragm floor 5b.

A containment vessel head 10 is arranged above the reactor pressure vessel 2. The containment vessel head 10 is made of steel and configured to be removed during refueling.

The dry well 4 and the suppression pool 6 are connected by LOCA vent pipes 8. There are installed a plurality of, for example, ten LOCA vent pipes 8, whereas FIG. 8 shows only two of them (See FIG. 9). The LOCA vent pipes 8 have horizontal vent pipes 8a in the portions submerged in the pool water of the suppression pool 6. The horizontal vent pipes 8a open in the pool water. In the case of the RCCV 12, three horizontal vent pipes 8a are vertically arranged on each of the LOCA vent pipes 8. In the case of the RCCV 12, the LOCA vent pipes 8 are installed through the cylindrical wall of the pedestal 61. In the case of the RCCV 12, the cylindrical wall of the pedestal 61 is thus also referred to as a vent wall. The vent wall is made of steel plate reinforced concrete with a thickness of approximately 1.7 m. The inner and outer surfaces are made of steel plates. The LOCA vent pipes 8 and the pedestal 61 constitute a part of the containment vessel 3.

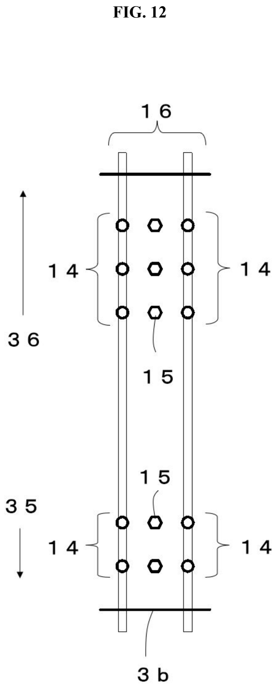

As shown in Fig. 8, a meridian rebar 14 is installed in a vertical direction in the cylindrical wall 3a. The diameter of the meridian rebar 14 is about 0.051 m. Although many meridian rebars 14 are installed only one is shown in Fig. 8. The more the number of the meridian rebars 14 is, the stronger the structural strength of the cylindrical wall 3a becomes. In the present prior art, 5 rows of the meridian rebars 14 are arranged in a radial direction. Each row installs at most 320 of the meridian rebars 14 in a circumference direction. Namely, the maximum number of the meridian rebars 14 is 1600 (See FIG. 12). The reason for saying at most is that the meridian rebars 14 are not necessarily installed in all positions. It means that at most 1600 rebars can be installed as needed.

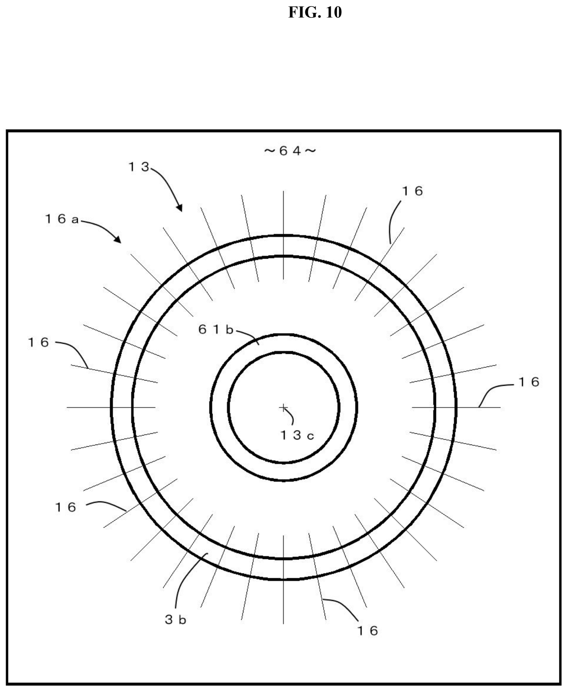

An outline of a configuration of a base slab of a reinforced concrete containment vessel of a first conventional nuclear power plant will be described with reference to FIGS. 10 and 11.

### <Explanation Relating to FIG. 10: a base slab of RCCV>

FIG. 10 is a plan view showing an example of a configuration of a base slab 13 of a reinforced concrete containment vessel (RCCV) 12 of a first conventional nuclear power plant (ABWR). In FIG. 10, the base slab 13 is arranged in a base mat 64. The base slab 13 is also made of reinforced concrete. In FIG. 10, the base slab 13 is a round shape of which outer diameter is about 33 m. A pedestal 61 is mounted on a center part (See FIG. 8). A pedestal base part 61b having about 1.7 m thickness is only shown in FIG. 10. A straight line which extends a center line 61c of the pedestal 61 into the base slab 13 is a center line 13a of the base slab 13 (See FIG. 11). A center line position 13c is shown as + mark in Fig. 10. The cylindrical wall 3a made of about 2 m thick reinforced concrete is connected to a peripheral part (See FIG. 8). A cylindrical wall base part 3b having about 2 m thick is only shown in FIG. 10. Many radial rebars 16 are arranged at least partially in the base slab 13, extend radially having a center of radiation at the center line 13a of the base slab 13, and penetrate the cylindrical wall base part 3b. The radial rebars 16 are shown by narrow lines in FIG. 10. The diameter of the radial rebars 16 is about 0.038 m. In the present prior art, the number of the radial rebars 16 is 320. The 320 radial rebars 16 are arranged at regular radiation angle intervals of 1.125 degrees. One tenth of the 320 radial rebars 16, namely, only 32 radial rebars 16 are shown in FIG. 10 because it becomes difficult to distinguish all the 320 radial rebars 16 if they are all depicted. By the way, although some of the radial rebars 16 are extended to a position close to the center line 13a by decreasing their number, this portion is not shown in FIG. 10. FIG. 10 shows only a portion where 320 of the radial rebars 16 are arranged. The 320 radial rebars 16 are arranged in a circumferential direction and constitute a radial rebar group 16a in entirety.

FIG. 11 is a sectional elevational view showing an example of a configuration of a base slab 13 of the reinforced concrete containment vessel (RCCV) 12 of a first conventional nuclear power plant (ABWR). FIG. 11 shows a right-side half portion. A left-side portion is also symmetric. The thickness of the base slab 13 is about 3 m to about 6.5 m. However, it is not limited to this range. FIG. 11 shows an example of about 5.5 m. The radial rebars 16 extends horizontally from a side of the center line 13a, penetrate the cylindrical wall base part 3b diagonally upward, and extend horizontally again. There is the base mat 64 of the reactor building (not shown) around the base slab 13. The radial rebars 16 extend into an inside of the base mat 64. 320 of the radial rebars 16 are arranged in a circumferential direction and constitute the radial rebar group 16a in entirety. Multi stages of the radial rebar group 16a are arranged vertically changing levels in order to enhance structural strength of the base slab 13. 5 stages of the radial rebar group 16a are arranged in FIG. 11. In each stage the shape of the radial rebar group 16a in a plain view is the same. Namely, 5 stages of the radial rebar group 16a having the exactly the same shape are arranged to overlap.

FIG. 12 is a plan view showing a configuration of the meridian rebars 14 and the radial rebars 16 in the cylindrical wall base part 3b of the reinforced concrete containment vessel (RCCV) 12 of a first conventional nuclear power plant (ABWR). In FIG. 12 a side faces an inside of the cylindrical wall 3a (a center side) is referred to as an inside 35 and an opposite side is referred to as an outside 36. 320 of the radical rebars 16 are arranged along a circumference of the cylindrical wall base part 3b. Out of them a portion of two (columns) of the radial rebars 16 is shown in FIG. 12. The diameter of the radial rebars 16 is about 0.038 m. The meridian rebars 14 are connected to the radial rebars 16. Although in order to connect rebars they actually contact to each other transversely, in FIG. 12 rebars are shown to intersect for simplicity. The diameter of the meridian rebars 14 is about 0.051 m. Lines of the meridian rebars 14 arranged along circumference are referred to as rows. In the present prior art, 2 rows of the meridian rebars 14 are arranged inside and 3 rows outside. There are 5 rows arranged in entirety. The distance between one row and another row of the meridian rebars is about 0.2 m from center to center of rebars. The maximum number of the meridian rebars 14 in each row along circumference one round is 320 which is the same number of the radial rebars 16. As there are 5 rows the maximum total number of the meridian rebars 14 is 1600.

In FIG. 12 the distance between two radial rebars 16 is about 0.3 m from center to center. In order to keep about 0.3 m distance between center to center of the radial rebars 16, the number of the radial rebars 16 becomes 320. The diameter of the meridian rebars 14 is about 0.051 m. An opening reinforcement rebar 15 is arranged additionally between two meridian rebars 14 as an additional meridian rebar in the periphery of an opening such as a mechanical hatch (not shown). The diameter of the opening reinforcement rebar 15 is also about 0.051 m. Thus, it is necessary to arrange three rebars of about 0.051 m diameter in the distance of about 0.3 m. 0.3 m is the optimum distance to be able to meet both requirements not only to arrange the meridian rebars 14 as much as densely, but also to keep space for arranging the opening reinforcement rebar 15. If the distance is enlarged more than it the density of the meridian rebars 14 along circumference is lowered and structural strength of the cylindrical wall 3a is decreased. On the other hand, if the distance is more narrowed than it, it becomes unable to install the opening reinforcement rebar 15. If the opening reinforcement rebar 15 cannot be installed, structural strength of the cylindrical wall 3a in the periphery of an opening is decreased.

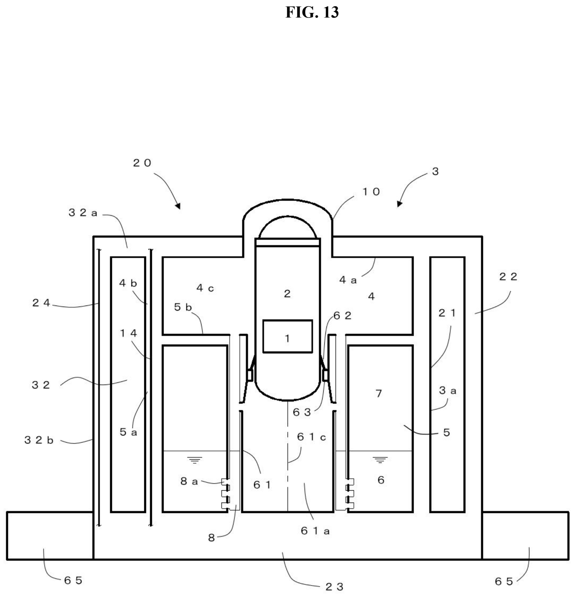

### <Explanation Relating to FIG. 13: a Second Conventional Nuclear Power Plant>

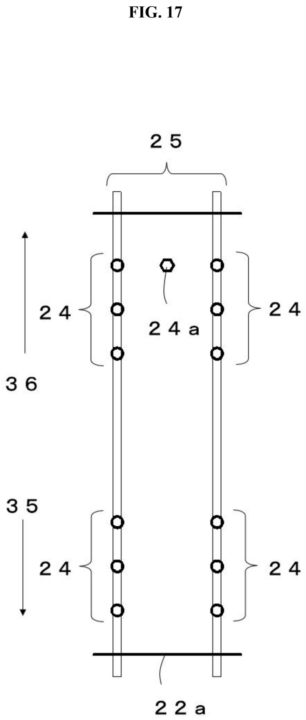

Explanation of a second conventional nuclear power plant will be described with reference to FIGS. 13 and 17.

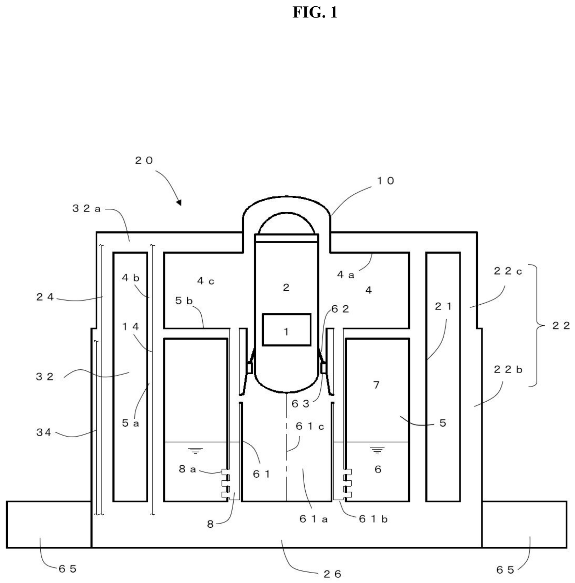

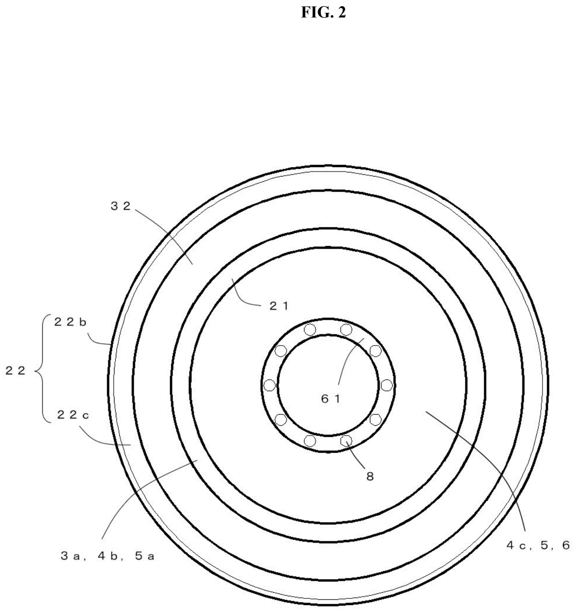

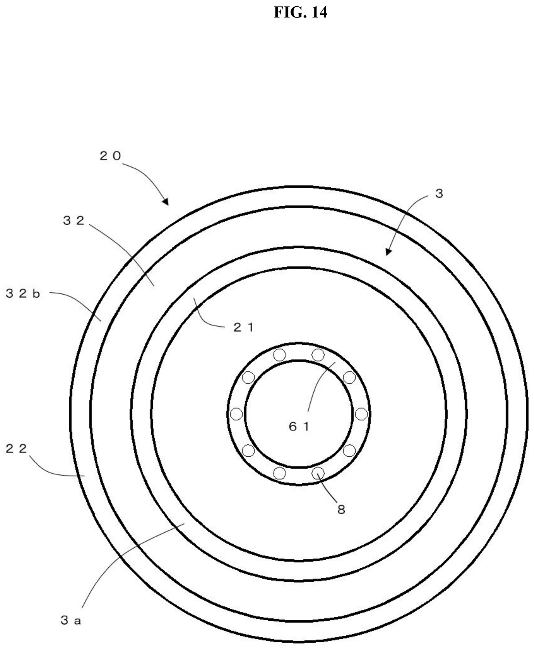

FIG. 13 is a sectional elevational view showing an example of a configuration around a containment vessel of the second conventional nuclear power plant. The present prior art is published in FIG. 1 and FIG. 2 of the patent document 1, and FIG. 1 of the patent document 2. The present prior art is adopted by Severe Accident Tolerant and Optimized Reactor (SATOR, ICONE19-4334). In FIG. 13, a core 1 is contained in a reactor pressure vessel 2. The reactor pressure vessel 2 is contained in a containment vessel 3. The containment vessel 3 has a cylindrical shape (see FIG. 14). In FIG. 13 the configuration of the core 1, the reactor pressure vessel 2 and the containment vessel 3 is the same as that of the first conventional nuclear power plant shown in FIG. 8. In the following, in order to avoid duplication, the configuration of the second conventional nuclear power plant that is different from that of the first conventional nuclear power plant is described.

### <Explanation of an Outer Well>

Further, in the second conventional nuclear power plant, an outer well 32 is provided outside the dry well 4 and the wet well 5. The outer well 32 adjoins the dry well 4 via a dry well common part wall 4b, and adjoins the wet well 5 via a wet well common part wall 5a. A ceiling part of the outer well 32 is a flat plate, which will be referred to as a top slab 32a of the outer well 32. An outer wall of the outer well 32 will be referred to as an outer wall 32b of the outer well 32. The top slab 32a and the outer wall 32b are made of reinforced concrete. The outer well 32 has pressure resistance and airtightness equivalent to those of the dry well 4 and the wet well 5.

The material of the outer well 32 is also reinforced concrete. Liners (not shown) are laid on the inner surfaces in the same way as the containment vessel 3. The outer wall 32b of the outer well 32 according to the present prior art is configured to surround the outer wall 3a of the containment vessel 3 (See FIG. 14). The outer wall (cylindrical wall) 3a and the outer wall 32b of the outer well 32 constitute double walls. An upper part of the cylindrical wall 32a of the containment vessel 3 and an upper part of the outer wall 32b of the outer well 32 are connected to the top slab 32a. The containment 3 and the outer well 32 are integrated to constitute a double shell containment vessel 20. The outer wall (cylindrical wall) 3a of the containment vessel 3 is referred to as a first shell (inner shell) 21 of the double shell containment vessel 20. The outer wall 32b of the outer well 32 is referred to as a second shell (outer shell) 22 of the double shell containment vessel 20. The inner shell 21 is cylindrical. The thickness of the inner shell 21 is about 2 m. The outer shell 22 may be also cylindrical but it is not limited thereto. The top plain view of the outer shell may also be oval. The thickness of the outer shell 21 is about 2 m. If the outer shell 21 is cylindrical, the double shell containment vessel 20 is also referred to as a double cylinder containment vessel. A base slab 23 made of reinforced concrete is arranged in a base part of the double shell containment vessel 20. The base slab 23 constitute a part of the double shell containment vessel 20. A liner (not shown) is laid on the upper surface of the base slab 23. A base mat 65 of a reactor building (not shown) is arranged around the base slab 23. The base slab 23 is connected with the base mat 65. The base mat 65 is also made of reinforced concrete.

As shown in FIG. 13 an outer shell meridian rebar 24 is arranged in a vertical direction in the outer shell 22. The diameter of the outer shell meridian rebar 24 is about 0.051 m. Although many outer shell meridian rebars 24 are arranged only one is shown in FIG. 13. The more the number of the outer shell meridian rebars 24 is, the stronger the structural strength of the outer shell 22 becomes. In the present prior art, 6 rows of the outer shell meridian rebars 24 are arranged in a radial direction. Each row installs at most 320 of the outer shell meridian rebars 24 in a circumference direction. Namely, the maximum number of the outer shell meridian rebars 24 is 1920 (See FIG. 17). The reason for saying at most is that the outer shell meridian rebars 24 are not necessarily installed in all positions. It means that at most 1920 rebars can be installed as needed. The inner shell 21 also installs an inner shell meridian rebar 14 which is the same as the meridian rebars 14 installed in the cylindrical wall 3a of the first conventional nuclear power plant (See FIG. 8). As the cylindrical wall 3a is referred to as the inner shell 21 in the second conventional nuclear power plant, the name is accordingly changed to the inner shell meridian rebars 14

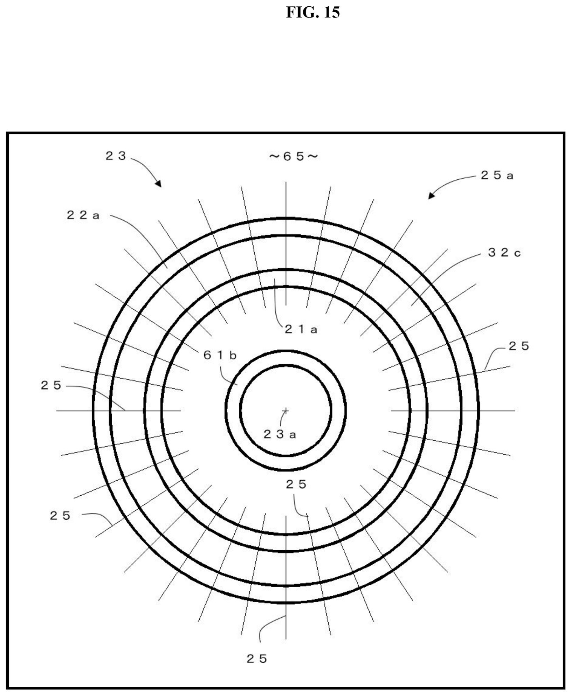

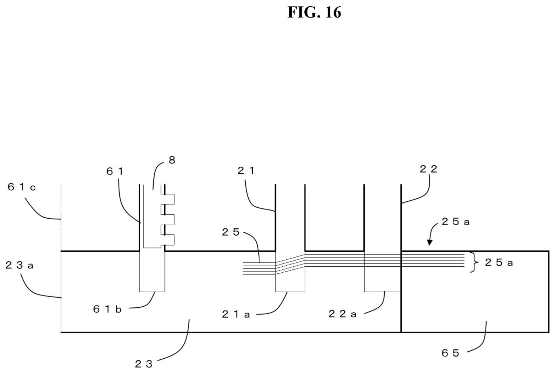

FIG. 15 is a plan view showing an example of a configuration of a base slab 23 of the double shell containment vessel 20 of the second conventional nuclear power plant. In FIG. 15, the base slab 23 is arranged in a base mat 65. The base slab 23 is a round shape of which outer diameter is about 45 m. A pedestal 61 is mounted on a center part (See FIG. 13). A pedestal base part 61b having about 1.7 m thickness is only shown in FIG. 15. A straight line which extends a center line 61c of the pedestal 61 into the base slab 23 is a center line 23a of the base slab 23 (See FIG. 16). The position of the center line 23a is shown as + mark in Fig. 15. The inner shell 21 (See FIG. 13) made of about 2 m thick reinforced concrete is connected to a middle part. An inner shell base part 21a having about 2 m thickness is only shown in FIG. 15. The outer shell 22 (See FIG. 13) made of about 2 m thick reinforced concrete is connected to an outermost peripheral part. An outer shell base part 22a having about 2 m thickness is only shown in FIG. 15.

In FIG. 15, extended radial rebars 25 are arranged at least partially in the base slab 23, extend radially having a center of radiation at the center line 23a of the base slab 23, and penetrate both the inner shell base part 21a and the outer shell base part 22a. The number of the extended radial rebars 25 is 320. One tenth of 320, namely, 32 extended radial rebars 25 are shown by narrow lines in FIG. 15 for simplicity. 320 extended radial rebars 25 are arranged in a circumferential direction and constitute an extended radial rebar group 25a in entirety. The diameter of the extended radial rebar 25 is about 0.038 m. 6 rows of the outer shell meridian rebars 24 are connected to one column of the extended radial rebar 25 in the outer shell base part 22a (See FIG. 17). These extended radial rebars 25 are something that extend the 320 radial rebars 16 (See FIG. 10) in the base slab 13 of the first conventional nuclear power plant to penetrate the outer shell base part 22a. As a result, the interval of extended radial rebars 25 is enlarged radially so that the center-to-center distance of the extended radial rebars 25 in the outer shell base part 22a is enlarged to about 0.45 m. The center-to-center distance of the extended radial rebars 25 in the inner shell base part 21a is the optimum value of 0.3 m. Therefore, the density of the outer shell meridian rebars 24 in a circumferential direction is lowered to 0.3 / 0.45 of the density of the inner shell meridian rebars 14. In this way, if a design using the extended radial rebars 25 is performed, there must happen a thing where the structural strength of the outer shell 22 is inevitably lowered than the structural strength of the inner shell 21 according to the ratio of diameters of the both shells. By the way, although some of the extended radial rebars 25 are extended to a position close to the center line 23a by decreasing their number, this portion is not shown in FIG. 15. FIG. 15 shows only a portion where 320 of the extended radial rebars 25 are arranged.

FIG. 16 is a sectional elevational view showing an example of a configuration of a base slab of the double shell containment vessel 20 of a second conventional nuclear power plant (SATOR). FIG. 16 shows a right-side half portion. A left-side portion is also symmetric. The thickness of the base slab 23 is about 3 m to about 6.5 m. However, it is not limited to this range. FIG. 16 shows an example of about 5.5 m. The extended radial rebars 25 extend horizontally from a side of the center line 23a, penetrate the inner shell base part 21a diagonally upward, extend horizontally again, and penetrate the outer shell base part 22a. There is the base mat 65 of the reactor building (not shown) around the base slab 23. The extended radial rebars 25 extend into an inside of the base mat 65. 320 of the extended radial rebars 25 are arranged in a circumferential direction and constitute the extended radial rebar group 25a in entirety. Multi stages of the extended radial rebar group 25a are arranged vertically changing levels in order to enhance structural strength of the base slab 23. 5 stages of the extended radial rebar group 25a are arranged in FIG. 16. In each stage the shape of the extended radial rebar group 25a in a plain view is the same. Namely, 5 stages of the extended radial rebar group 25a having the exactly the same shape are arranged to overlap. By the way, although some of the extended radial rebars 25 are extended to a position close to the center line 23a by decreasing their number, this portion is not shown in FIG. 16. FIG. 16 shows only a portion where 320 of the extended radial rebars 25 are arranged.

FIG. 17 is a plan view showing a configuration of the outer shell meridian rebars 24 and the extended radial rebars 25 in the outer shell base part 22a of a second conventional nuclear power plant (SATOR). In FIG. 17 a side faces an inside of the outer shell 22a (a center side) is referred to as an inside 35 and an opposite side is referred to as an outside 36. 320 of the extended radial rebars 25 are arranged along a circumference of the outer shell base part 22a. Out of them a portion of two (columns) of the extended radial rebars 25 is shown in FIG. 17. The diameter of the extended radial rebars 25 is about 0.038 m. The outer shell meridian rebars 24 are connected to the extended radial rebars 25. Although in order to connect rebars they actually contact to each other transversely, in FIG. 17 rebars are shown to intersect for simplicity. The diameter of the outer shell meridian rebars 24 is about 0.051 m. Lines of the outer shell meridian rebars 24 arranged along circumference are referred to as rows. In the present prior art, 3 rows of the outer shell meridian rebars 24 are arranged inside and 3 rows outside. There are 6 rows arranged in entirety. The distance between one row and another row of the outer shell meridian rebars is about 0.2 m from center to center of rebars. The maximum number of the outer shell meridian rebars 24 in each row along circumference one round is 320 which is the same number of the extended radial rebars 25. As there are 6 rows the maximum total number of the outer shell meridian rebars 24 is 1920.

In FIG. 17, the center-to-center distance between two extended radial rebars 25 in the outer shell base part 22a is about 0.45 m. On the other hand, the center-to-center distance between two extended radial rebars 25 in the inner shell base part 21a is about 0.3 m. Therefore, the density of the outer shell meridian rebars 24 in a circumferential direction is lowered to 2 / 3 of the density of the inner shell meridian rebars 14. As the number of the extended radial rebars 25 is constantly 320, the interval between two extended radial rebars 25 in the outer shell base part 22a is enlarged radially. The diameter of the outer shell meridian rebars 24 is about 0.051 m. An outer shell opening reinforcement rebar 24a is installed additionally between two outer shell meridian rebars 24 as an additional outer shell meridian rebar in the periphery of an opening such as a mechanical hatch (not shown). The diameter of the outer shell opening reinforcement rebar 24a is also about 0.051 m. Thus, it is easy to arrange three rebars of about 0.051 m diameter in the distance of about 0.45 m. However, as the distance between the outer shell meridian rebars 24 and the outer shell opening reinforcement rebar 24a is also enlarged to 1.5 times as compared to the proper optimum value, the effect of installing the outer shell opening reinforcement rebar 24a is not being sufficiently achieved.

### PRIOR ART DOCUMENTS

### Patent Documents

Patent Document 1: Japanese Patent Application Laid-Open Publication No. 2021-67509 (US 2023/0070817 A1)
Patent Document 2: Japanese Patent Application Laid-Open Publication No. 2012-117821 (US 2013/0259184 A1)

### SUMMARY OF THE INVENTION

### Problems to be Solved by the Invention

When you construct the double shell containment vessel 20 by further arranging the second shell (outer shell) 22 outside the first shell (inner shell) 21 which is the outer wall (cylindrical wall) 3a of the containment vessel 3, and if you arrange the extended radial rebars 25 by simply extending the 320 radial rebars 16 (See FIG. 10) of the base slab 13 to the outer shell base part 22a, the interval between the extended radial rebars 25 in the outer shell base part 22a is enlarged radially as the distance between the inner shell 21 and the outer shell 22 becomes large. Then the density of the outer shell meridian rebars 24 in a circumference direction is decreased because they are connected to the extended radial rebars 25 in the outer shell base part 22a. Thus, the structural strength of the outer shell 22 is lowered. For example, in a case where the outer diameter of the inner shell 21 is about 33 m, with the distance between the inner shell 21 and the outer shell 22 being about 4 m, and the thickness of the outer shell 22 is about 2.6 m, the outer diameter of the outer shell 22 becomes about 46.2 m. Then, the interval of the extended radial rebars 25 in the outer shell base part 22a is enlarged to about 0.45 m (See FIG. 15). This exceeds largely the optimum value of about 0.3 m for the interval of the extended radial rebars 25. In this situation, there is a problem that the structural strength of the outer shell 22 is decreased to 2 / 3 as the density of the outer shell meridian rebars 24 in the outer shell 22 is decreased to 2 / 3.

In order to increase the structural strength of the outer shell 22, the number of the extended radial rebars 25 to which the outer shell meridian rebars 24 connect must be increased. However, the extended radial rebars 25 must be arranged with a uniform interval. As there are already 320 of the extended radial rebars 25 arranged uniformly, it is impossible to install additional radial rebars randomly between the extended radial rebars 25. There is no other means to install additional radial rebars keeping a uniform interval than to install 640 extended radial rebars 25 making the number of the extended radial rebars 25 twice. However, the interval between the extended radial rebars 25 in the outer shell base part 22a must be narrowed to about 0.23 m if 640 of the extended radial rebars 25 are installed by making the number of the extended radial rebars 25 twice. If that is the case, the interval of the extended radial rebars 25 becomes much smaller than the optimum value of 0.3 m so that it becomes impossible to install the outer shell opening reinforcement rebars 24a around openings.

Further, there is also another problem that the structural strength of the base slab 23 itself is lowered where closer to the periphery. Although the number of the extended radial rebars 25 is constantly 320, as the extended radial rebars 25 are enlarged radially, the density of the extended radial rebars 25 is decreased where closer to the periphery. Thus, there is a problem that the structural strength of the base slab 32c in the portion of the outer well 32 is decreased.

### Means for Solving the Problems

A nuclear plant according to embodiments of the present invention is comprising: a plurality of inner shell radial rebars 27 that are arranged at least in a base slab 26, extending radially having a center of radiation at a center line of the base slab 26, and penetrate an inner shell base part 21a; a plurality of outer shell radial rebars 28 that are extending radially having a center of radiation at the center line of the base slab 26, and penetrate an outer shell base part 22a; and a plurality of common radial rebars 29 that penetrate both of the inner shell base part 21a and the outer shell base part 22a, being a part of the inner shell radial rebars 27 and also being a part of the outer shell radial rebars 28, wherein the number of the outer shell radial rebars 28 is larger than the number of the inner shell radial rebars 27 and the maximum number of the common radial rebars 29 is the greatest common divisor of the number of the inner shell radial rebars 27 and the number of the outer shell radial rebars 28.

The reason why the maximum number of the common radial rebars 29 is the greatest common divisor of the number of the inner shell radial rebars 27 and the number of the outer shell radial rebars 28 is as follows. Let the number of the inner shell radial rebars 27 is N. Let the number of the outer shell radial rebars is M. Let the greatest common divisor of N and M is G. Let the quotients of each number divided by G are n and m. Then, N = nG and M = mG. As for the radiation angle of each one of rebars, 360 degrees / nG for the inner shell radial rebars 27 and 360 degrees / mG for the outer shell radial rebars 28. As the radiation angles are different, both rebars do not overlap. However, the angle of the nth rebars of the inner shell radial rebars 27 is 360 degrees / nG × n = 360 degrees / G. On the other hand, the angle of the mth rebars of the outer shell radial rebars 28 is 360 degrees / mG × m = 360 degrees / G. As the angles become the same, both rebars overlap and become the common radial rebars 29. As a result, the common radial rebars 29 appear at every radiation angle of 360 degrees / G. The maximum number of appearance in 360 degrees one round is 360 degrees / 360 degrees / G = G. As a result, the maximum number C of the common radial rebars 29 is C = G. The reason why the maximum number of the common radial rebars 29 is addressed is that it can happen that one or more common radial rebars 29 are cut in the middle and divided into the inner shell radial rebars 27 and the outer shell radial rebars 28. The more the number of the common radial rebars 29 is, the more the strength of the base slab 26 of the double shell containment vessel 20 becomes. Therefore, when the number of the common radial rebars 29 is the maximum number, the strength of the base slab 26 of the double shell containment vessel becomes maximum.

### Advantage of the Invention

According to an embodiment of the present invention, it becomes possible to reinforce the structural strength of the outer shell 22 by increasing the density in a circumferential direction of the outer shell meridian rebars 24 in the second shell (outer shell) 22 of the double shell containment vessel 20. Further, the structural strength of the base slab 32c of the base slab 26 which is a base part of the outer well 32 is largely enhanced.

### BRIEF DESCRIPTION OF THE DRAWINGS

FIG. 1 is a sectional elevational view showing a configuration around a double shell containment vessel of a nuclear plant according to a first embodiment of the present invention.
FIG. 2 is a plan view showing a configuration around a double shell containment vessel of a nuclear plant according to a first embodiment of the present invention.
FIG. 3 is a plan view showing a base slab of a double shell containment vessel of a nuclear plant according to a first embodiment of the present invention.
FIG. 4 is a plan view showing a detailed configuration of a base slab of a double shell containment vessel of a nuclear plant according to a first embodiment of the present invention.
FIG. 5 is a plan view showing a detailed configuration of a base slab of a double shell containment vessel of a nuclear plant according to a second embodiment of the present invention.
FIG. 6 is a sectional elevational view showing a configuration of a base slab of a double shell containment vessel of a nuclear plant according to a third embodiment of the present invention.
FIG. 7 is a plan view showing configurations of outer shell radial rebars and outer shell meridian rebars in outer shell base parts of a double shell containment vessel according to a fourth embodiment of the present invention.
FIG. 8 is a sectional elevational view showing a configuration around a containment vessel of a first conventional nuclear power plant (ABWR).
FIG. 9 is a plan view showing a configuration around a containment vessel of a first conventional nuclear power plant (ABWR).
FIG. 10 is a plan view showing an example of a configuration of a base slab of a reinforced concrete containment vessel (RCCV) of a first conventional nuclear power plant (ABWR).
FIG. 11 is a sectional elevational view showing a configuration of a base slab of a reinforced concrete containment vessel (RCCV) of a first conventional nuclear power plant (ABWR).
FIG. 12 is a plan view showing a configuration of meridian rebars and radial rebars in a cylindrical wall base part of a reinforced concrete containment vessel (RCCV) of a first conventional nuclear power plant (ABWR).
FIG. 13 is a sectional elevational view showing a configuration around a double shell containment vessel of a second conventional nuclear power plant (SATOR).
FIG. 14 is a plan view showing a configuration around a double shell containment vessel of a second conventional nuclear power plant (SATOR).
FIG. 15 is a plan view showing a configuration of a base slab of a double shell containment vessel of a second conventional nuclear power plant (SATOR).
FIG. 16 is a sectional elevational view showing an example of a base slab of a double shell containment vessel of a second conventional nuclear power plant (SATOR).
FIG. 17 is a plan view showing a configuration of outer shell meridian rebars and extended radial rebars in an outer shell base part of a second conventional nuclear power plant (SATOR).

### EMBODIMENTS OF THE INVENTION

A double shell containment vessel 20 made of reinforced concrete according to embodiments of the present invention will be described below with reference to FIGS. 1 to 7. The same or similar parts as/to those of the prior art, and the same or similar parts between the following embodiments, will be designated by the same reference numerals. Redundant descriptions will be omitted, and only essential parts will be described.

### First Embodiment

FIG. 1 is a sectional elevational view showing a configuration of a double shell containment vessel 20 according to a first embodiment of the present invention. In the present embodiment, a second shell (outer shell) 22 is arranged outside of a first shell (inner shell) 21. The inner shell 21 is a cylindrical wall made of reinforced concrete. The outer shell 22 is also a cylindrical wall made of reinforced concrete (See FIG 2). The inner diameter of the inner shell 21 is about 29 m. However, the inner diameter of the inner shell 21 is not limited to 29 m. The thickness of the inner shell 21 is about 2 m. However, the thickness of the inner shell 21 is not limited to 2 m. The inner diameter of the outer shell 22 is, for example, about 41 m. However, the inner diameter of the outer shell 22 is not limited to 41 m. The thickness of an outer shell lower part 22b is, for example, 2.6 m. However, the thickness of the outer shell lower part 22b is not limited to 2.6 m. It may be an appropriate value such as 2.0 m, 2.5 m, 3.0 m, and so on. The thickness of an outer shell upper part 22c is, for example, 2 m. However, the thickness of the outer shell upper part 22c is not limited to 2 m. The border between the outer shell lower part 22b and the outer shell upper part 22c is, for example, set at the level of a diaphragm 5b. However, the border between the outer shell lower part 22b and the outer shell upper part 22c is not limited to the level of a diaphragm 5b. The inner diameters of the outer shell upper part 22c and the outer shell lower part 22b are the same. The distance between the inner shell 21 and the outer shell 22 is, for example, 4 m. However, it is not limited to 4 m. A base slab 26 made of reinforced concrete is arranged in the base part of the double shell containment vessel 20. The base slab 26 constitutes a part of the double shell containment vessel 20. A steel liner (not shown) is lined on the upper surface of the base slab 26. A base mat 65 of a reactor building (not shown) is arranged around the base slab 26. The base slab 26 is connected with the base mat 65. The base mat 65 is also made of reinforced concrete.

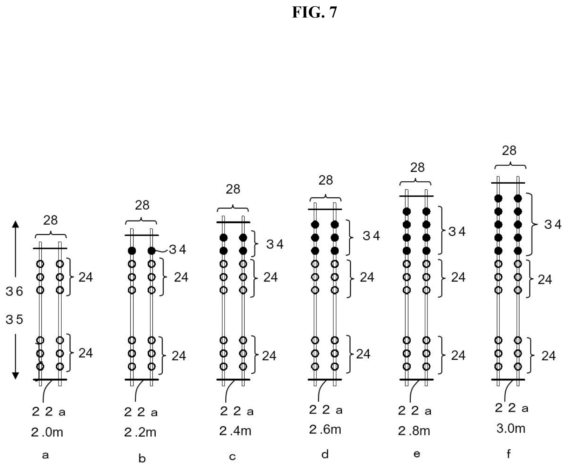

As shown in FIG. 1 an outer shell meridian rebar 24 is arranged in a vertical direction in the outer shell 22. The diameter of the outer shell meridian rebar 24 is about 0.051 m. Although a plurality of outer shell meridian rebars 24 are arranged only one is shown in FIG. 1. The more the number of the outer shell meridian rebars 24 is, the stronger the structural strength of the outer shell 22 becomes. In the present embodiment, 6 rows of the outer shell meridian rebars 24 are arranged in a radial direction (See FIG. 7). Each row installs at most 320 of the outer shell meridian rebars 24 in a circumference direction. Namely, the maximum number of the outer shell meridian rebars 24 is 1920. The reason for saying at most is that the outer shell meridian rebars 24 are not necessarily installed in all positions. It means that at most 1920 rebars can be installed as needed.

Further, as shown in FIG. 1, additional outer shell meridian rebars 34 are installed as the thickness of the outer shell lower part 22b is about 2.6 m. The diameter of the additional outer shell meridian rebars 34 is about 0.051 m. Although a plurality of additional outer shell meridian rebars 34 are installed, only one is shown in FIG. 1. The more the number of the additional outer shell meridian rebars 34 is, the stronger the structural strength of the outer shell lower part 22b becomes. Other parts of the configuration in FIG. 1 are the same as the configuration of the conventional double shell containment vessel 20 in FIG. 13.

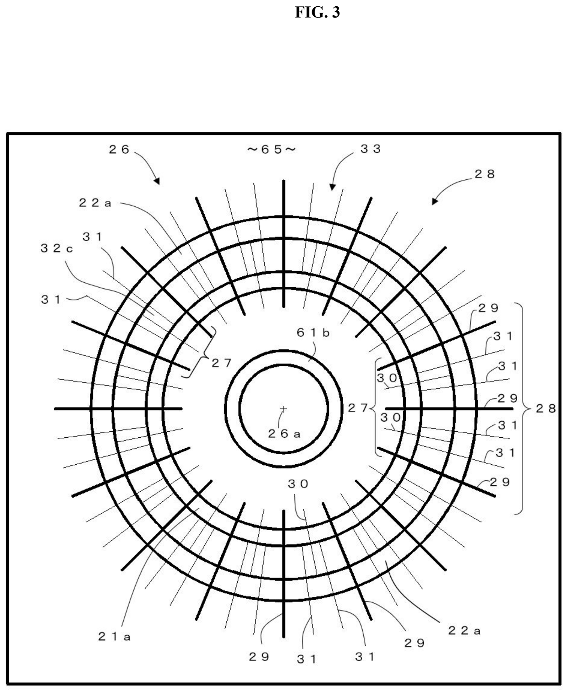

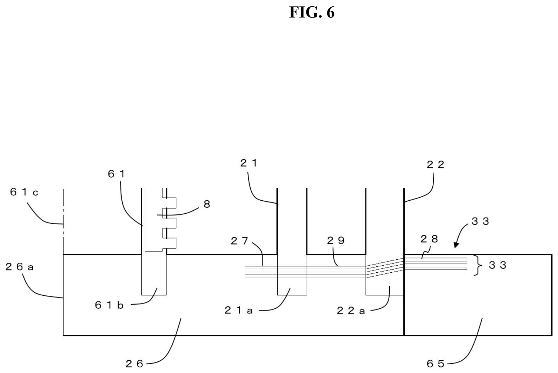

FIG. 3 is a plan view showing a base slab 26 of a double shell containment vessel 20 according to a first embodiment of the present invention. In FIG. 3, the base slab 26 is arranged in a base mat 65. The base slab 26 is a round shape of which outer diameter is about 46.2 m. A pedestal 61 is mounted on a center part (See FIG. 1). A pedestal base part 61b having about 1.7 m thickness is only shown in FIG. 3. A straight line which extends a center line 61c of the pedestal 61 into the base slab 26 is a center line 26a of the base slab 26 (See FIG. 6). The position of the center line 26a is shown as + mark in Fig. 3. The inner shell 21 (See FIG. 1) made of about 2 m thick reinforced concrete is connected to a middle part. An inner shell base part 21a having about 2 m thickness is only shown in FIG. 3. The outer shell lower part 22b (See FIG. 1) made of about 2.6 m thick reinforced concrete is connected to an outermost peripheral part. An outer shell base part 22a having about 2.6 m thickness is only shown in FIG. 3.

**In** the present embodiment, inner shell radial rebars 27 are arranged at least partially in the base slab 26, extend radially having a center of radiation at the center line 26a of the base slab 26, and penetrate the inner shell base part 21a. The number of the inner shell radial rebars 27 is 320. One tenth of 320 inner shell radial rebars 27, namely 32, are shown in FIG. 3 by reducing the number for simplicity. Further, outer shell radial rebars 28 are arranged at least partially in the base slab 26, extend radially having a center of radiation at the center line 26a of the base slab 26, and penetrate an outer shell base part 22a. The number of the outer shell radial rebars 28 is 480. One tenth of 480 outer shell radial rebars 28, namely 48, are shown in FIG. 3 by reducing the number for simplicity. Further, common radial rebars 29 are arranged at least partially in the base slab 26, extend radially having a center of radiation at the center line 26a of the base slab 26, and penetrate both of the inner shell base part 21a and the outer shell base part 22a. In FIG. 3 the common radial rebars 29 are shown by bold lines. The common radial rebars 29 are a part of the inner shell radial rebars 27 and also a part of the outer shell radial rebars 28. In the inner shell radial rebars 27, the rebars other than the common radial rebars 29 will be referred to as inner radial rebars 30. In FIG. 3 the inner radial rebars 30 are shown by narrow lines. The inner radial rebars 30 penetrate the inner shell base part 21a and extend right before the outer shell base part 22a but do not penetrate the outer shell base part 22a. The number of the inner shell radial rebars 27 is decided to 320 in order to make the center-to-center distance in the inner shell base part 21a to be about 0.3 m. In the outer shell radial rebars 28, the rebars other than the common radial rebars 29 will be referred to as outer radial rebars 31. In FIG.3 the outer radial rebars 31 are shown by narrow lines. The outer radial rebars 31 penetrate the outer shell base part 22a and extend right before the inner shell base part 21a but do not penetrate the inner shell base part 21a. The number of the outer shell radial rebars 28 is decided to 480 in order to make the center-to-center distance in the outer shell base part 22a to be about 0.3 m.

The maximum number of the common radial rebars 29 is 160 which is the greatest common divisor of 320 and 480, where 320 is the number of the inner shell radial rebars 27 and 480 is the number of the outer shell radial rebars 28. In FIG. 3, 16 of the common radial rebars 29 are shown by bold lines by reducing the number to one tenth. The number of the inner radial rebars 30 is 160 which is 320 - 160, where 320 is the number of the inner shell radial rebars 27 and 160 is the number of the common radial rebars 29. In FIG. 3, 16 of the inner radial rebars 30 are shown by narrow lines by reducing the number to one tenth. The number of the outer radial rebars 31 is 320 which is 480 - 160, where 480 is the number of the outer shell radial rebars 28 and 160 is the number of the common radial rebars 29. In FIG. 3, 32 of the outer radial rebars 31 are shown by narrow lines by reducing the number to one tenth. The inner shell radial rebars 27, the outer shell radial rebars 28 and the common radial rebars 29 constitute a radial rebar group 33 made of many radial rebars.

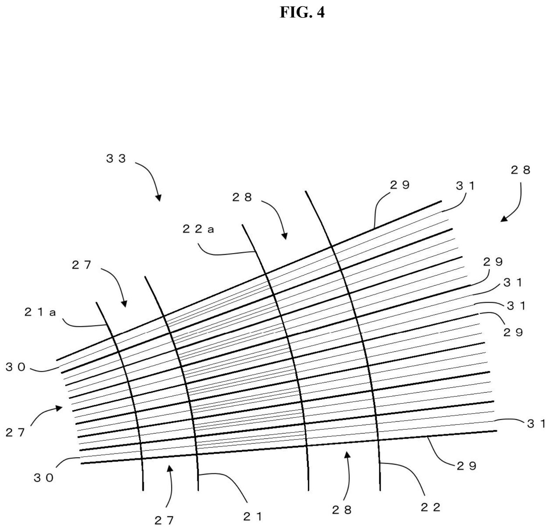

FIG. 4 is a plan view showing a detailed configuration of a base slab of a double shell containment vessel according to a first embodiment of the present invention. In FIG. 4, although a 1 / 20 section of the base slab 26 is shown, the rebars are shown in real numbers. The number of the common radial rebars 29 is 160 which are arranged at regular radiation angle intervals of 2.25 degrees. In FIG. 4, 9 of the common radial rebars 29 are shown. 2 of the outer radial rebars 31 are arranged at equal intervals between the 2 adjacent common radial rebars 29. As a result, the 480 outer shell radial rebars 28 penetrating the outer shell base part 22a are arranged at regular radiation angle intervals of 0.75 (2.25 / 3) degrees. The outer diameter of the outer shell base part 22a is 46.2 m. The center-to-center interval of the 480 outer shell radial rebars 28 penetrating the outer shell base part 22a becomes the optimum value of about 0.302 m. In the case of the prior art shown in FIG. 15, as the number of the extended radial rebars 25 penetrating the outer shell base part 22a is 320, the center-to-center interval of the extended radial rebars 25 is enlarged to about 0.45 m. Thus, there has been a problem that the structural strength of the outer shell 22 becomes insufficient due to lack of numbers of the outer shell meridian rebars 24 which connect to the extended radial rebars 25. In the present embodiment, it becomes possible to keep sufficient structural strength of the outer shell 22, because the number of the outer shell radial rebars 28 penetrating the outer shell base part 22a is increased to 480 and the outer shell meridian rebars 24 can be arranged densely. The inner shell radial rebars 27, the outer shell radial rebars 28 and the common radial rebars 29 constitute a radial rebar group 33 made of many radial rebars.

### Second Embodiment

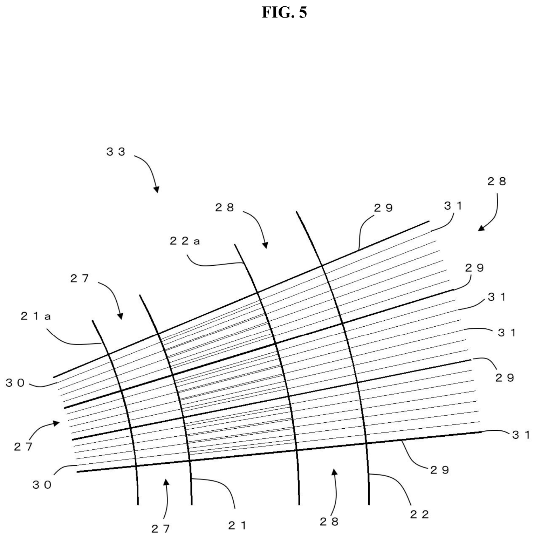

FIG. 5 is a plan view showing a detailed configuration of a base slab of a double shell containment vessel according to a second embodiment of the present invention. In FIG. 5, although a 3 / 64 section of the base slab 26 is shown, the rebars are shown in real numbers. The outer diameter of the inner shell 21 is about 33 m. The outer diameter of the outer shell 22 is about 46.2 m. As the number of the inner shell radial rebars 27 is 320, the number of the outer shell radial rebars 28 becomes 448 if the number is calculated according to the ratio of the diameters. So, in the present embodiment, the number of the outer shell radial rebars 28 is set to be 448. The center-to-center interval of the outer shell radial rebars 28 in the outer shell base part 22a becomes about 0.32 m. The number of the inner shell radial rebars 27 is 320. The greatest common divisor of 448 and 320 is 64. Namely, if the number of the outer shell radial rebars is 448, 64 can be used as the common radial rebars 29. Therefore, out of the inner shell radial rebars 27, 64 rebars can penetrate the outer shell base part 22a. Thus, the unity of the inner shell 21 and the outer shell 22 can be secured to a certain degree. There is no other number in the vicinity of 448 that has a greatest common divisor greater than 64 with 320. The greatest common divisors of 320 are as follows: 40 for 440, 1 for 441, 2 for 442, 1 for 443, 4 for 444, 5 for 445, 2 for 446, 1 for 447, 64 for 448, 1 for 449, 5 for 450, 1 for 451, 4 for 452, and a little apart 160 for 480. 64 for 448 is remarkably great among them. Further, 160 for 480 is miraculously great. The inner shell radial rebars 27, the outer shell radial rebars 28 and the common radial rebars 29 constitute a radial rebar group 33 made of many radial rebars.

### Third Embodiment

FIG. 6 is a sectional elevational view showing a configuration of a base slab 26 of a double shell containment vessel 20 according to a third embodiment of the present invention. FIG. 6 shows a right-side half portion. A left-side portion is also symmetric. The thickness of the base slab 26 is about 3 m to about 6.5 m. However, it is not limited to this range. FIG. 6 shows an example of about 5.5 m. The inner shell radial rebars 27, the outer shell radial rebars 28 and the common radial rebars 29 constitute a radial rebar group 33 made of many radial rebars. There is a base mat 65 of a reactor building (not shown) around the base slab 26. The radial rebar group 33 extends into an inside of the base mat. In the present embodiment, multi stages of the radial rebar group 33 having the same arrangement of rebars are arranged vertically changing levels in order to further enhance structural strength of the base slab 26. The number of the stages is set to be, for example, 5. In each stage the shape of the radial rebar group 33 in a plain view is the same. Namely, 5 stages of the radial rebar group 33 having the exactly the same shape are arranged to overlap.

### Fourth Embodiment

FIG. 7 is a plan view showing configurations of outer shell radial rebars 28 and outer shell meridian rebars 24 in outer shell base parts 22a according to a fourth embodiment of the present invention. In FIG. 7, in the present embodiment, the center-to-center interval is about 0.3 m between the two outer shell radial rebars 28 according to the first to the third embodiments. Further, in FIG. 7 as for the thickness of the outer shell base parts 22a, cases a to f, about 2.0 m to about 3.0 m, are shown. The thickness of the outer shell base part 22a is the same as the thickness of the outer shell lower part 22b. The thickness of the outer shell upper part 22c is about 2.0 m constantly. In case a, the thickness of the outer shell lower part 22b and the outer shell upper part 22c are the same and about 2.0 m. In FIG. 7 a side faces an inside of the outer shell 22 (a center side) is referred to as an inside 35 and an opposite side is referred to as an outside 36. 480 of the outer shell radial rebars 28 are arranged along a circumference of the outer shell base part 22a. Out of them a portion of two (columns) of the outer shell radial rebars 28 is shown in FIG. 7. The diameter of the outer shell radial rebars 28 is about 0.038 m. In case a, three rows of the outer shell meridian rebars 24 are connected to the outer shell radial rebars 28 in the inside. The center-to-center interval of the outer shell meridian rebars 24 in the inside three rows is about 0.2 m. Further, three rows of the outer shell meridian rebars 24 are also connected in the outside. The center-to-center interval of the outer shell meridian rebars 24 in these outside three rows is also about 0.2m. The center-to-center interval of the outer shell meridian rebars 24 (interval of rows) in a radius direction is about 0.2 m. Although in order to connect rebars they actually contact to each other transversely, in FIG. 7 rebars are shown to intersect for simplicity.

There is a tendency that seismic load on the outer shell lower part 22b is larger than seismic load on the outer shell upper part 22c. For that reason, the thickness of the outer shell lower part 22b is set to be larger than that of the outer shell upper part 22c and the additional outer shell meridian rebars 34 are installed in the outer shell lower part 22b (See FIG. 1). In case b, the thickness of the outer shell lower part 22b is about 2.2 m. The thickness of the outer shell base part 22a is also about 2.2 m. One row of the additional outer shell meridian rebars 34 is installed in the outside of the outer shell lower part 22b. In case c, the thickness of the outer shell lower part 22b is about 2.4 m. The thickness of the outer shell base part 22a is also about 2.4 m. Two rows of the additional outer shell meridian rebars 34 are installed in the outside of the outer shell lower part 22b. In case d, the thickness of the outer shell lower part 22b is about 2.6 m. The thickness of the outer shell base part 22a is also about 2.6 m. Three rows of the additional outer shell meridian rebars 34 are installed in the outside of the outer shell lower part 22b. In case e, the thickness of the outer shell lower part 22b is about 2.8 m. The thickness of the outer shell base part 22a is also about 2.8 m. Four rows of the additional outer shell meridian rebars 34 are installed in the outside of the outer shell lower part 22b. In case f, the thickness of the outer shell lower part 22b is about 3.0 m. The thickness of the outer shell base part 22a is also about 3.0 m. Five rows of the additional outer shell meridian rebars 34 are installed in the outside of the outer shell lower part 22b. To generalize above, it is necessary to increase the thickness of the outer shell lower part more than about 0.2 m to install one row of the additional outer shell meridian rebars 34 because the interval of the rows is about 0.2 m. Thus, in order to install n rows of the additional outer shell meridian rebars 34, it is good to increase the thickness of the outer shell lower part more than 0.2n m as compared to the thickness of the outer shell upper part. In this way, it becomes possible to conduct flexible seismic design by increasing the thickness of the outer shell lower part and installing additional rows of the additional outer shell meridian rebars 34 according to the magnitude of seismic load. In this regard, it is important to maintain the interval of the outer shell radial rebars 28 about 0.3 m according to the embodiments 1 - 3. Otherwise, the density of the outer shell meridian rebars 24 in a circumferential direction is decreased, or, it becomes difficult to install the outer shell opening reinforcement rebars 24a (See FIG. 17). By the way, in FIG. 7, diameters of the outer shell meridian rebars 24 and the additional outer shell meridian rebars 34 are shown twice of the real size for easy viewing.

### EXPLANATION OF THE REFERENCE NUMERALS

1: core; 2: reactor pressure vessel; 3: containment vessel; 3a: outer wall (cylindrical wall); 3b: cylindrical wall base part; 4: dry well; 4a: top slab; 4b: dry well common part wall; 4c: upper dry well; 5: wet well; 5a: wet well common part wall; 5b: diaphragm floor; 6: suppression pool; 7: wet well gas phase; 8 : LOCA vent pipe; 8a: horizontal vent pipe; 10 : top head; 12: reinforced concrete containment vessel (RCCV); 13: base slab; 13a: center line; 14:meridian rebar (inner shell meridian rebar); 15: opening reinforcement rebar; 16: radial rebar; 16a: radial rebar group; 20: double shell containment vessel; 21: first shell (inner shell); 21a: inner shell base part; 22: second shell (outer shell); 22a: outer shell base part; 22b: outer shell lower part; 22c: outer shell upper part; 23: base slab; 23a: center line; 24:outer shell meridian rebar; 24a: outer shell opening reinforcement rebar; 25: extended radial rebar; 25a: extended radial rebar group; 26: base slab; 26a: center line; 27: inner shell radial rebar; 28: outer shell radial rebar; 29: common radial rebar; 30: inner radial rebar; 31: outer radial rebar; 32: outer well; 32a: top slab; 32b: outer wall; 32c: base slab of the outer well part; 33: radial rebar group; 34: additional outer shell meridian rebar; 35: inside; 36: outside; 61: pedestal; 61a: pedestal cavity (lower dry well); 61b: pedestal base part; 61c: center line of the pedestal; 62: RPV skirt (vessel skirt); 63: RPV support (vessel support); 64:base mat; 65: base mat

## Claims

1. A nuclear plant comprising:
a core (1),
a reactor pressure vessel (2) containing the core (1),
a containment vessel (3) made of reinforced concrete including:
a dry well (4) containing the reactor pressure vessel (2),
a wet well (5) containing a suppression pool (6) connected with the drywell (4) via a LOCA vent pipe (8) in a lower part thereof, and a wet well gas phase (7) in an upper part thereof,
an outer wall (3a) of the containment vessel (3),
a pedestal (61) that supports the reactor pressure vessel (2) in the containment vessel (3) via an RPV skirt (62) and forms a pedestal cavity (61a) inside,
an outer well (32) made of reinforced concrete that is arranged outside the dry well (4) and the wet well (5), adjoins the dry well (4) via a dry well common part wall (4b), adjoins the wet well (5) via a wet well common part wall (5a), surrounds completely the dry well common part wall (4b) and the wet well common part wall (5a), and has pressure resistance and gas tightness equivalent to pressure resistance and gas tightness of the dry well (4) and the wet well (5),
an outer wall (32b) of the outer well (32),
a double shell containment vessel (20) consisting of the containment vessel (3) and the outer well (32), made of reinforced concrete, and having the outer wall (3a) of the containment vessel (3) as a first shell (inner shell) (21) and the outer wall (32b) of the outer well (32) as a second shell (outer shell) (22),
a plurality of outer shell meridian rebars (24) arranged in the outer shell (22),
a base slab (26) that is made of reinforced concrete, constitutes a base part of the double shell containment vessel (20), connects with the pedestal (61) at a pedestal base part (61b), connects with the first shell (inner shell) (21) at an inner shell base part (21a), connects with the second shell (outer shell) (22) at an outer shell base part (22a), and has a center line (26a) that extends from a center line (61c) of the pedestal (61),
a plurality of inner shell radial rebars (27) that are arranged at least partially in the base slab (26), arranged radially having the center line (26a) of the base slab (26) as a center of radiation angle, and penetrate the inner shell base part (21a),
a plurality of outer shell radial rebars (28) that are arranged at least partially in the base slab (26), arranged radially having the center line (26a) of the base slab (26) as a center of radiation angle, and penetrate the outer shell base part (22a), and
a plurality of common radial rebars (29) that penetrate both the inner shell base part (21a) and the outer shell base part (22a), being a part of the inner shell radial rebars (27) and also a part of the outer shell radial rebars (28), wherein
the number of the outer shell radial rebars (28) is larger than the number of the inner shell radial rebars (27), and
the maximum number of the common radial rebars (29) is equal to the greatest common divisor of the number of the inner shell radial rebars (27) and the number of the outer shell radial rebars (28).

2. The nuclear plant according to claim 1, wherein
the number of the inner shell radial rebars (27) is 320 and the number of the outer shell radial rebars (28) is 480.

3. The nuclear plant according to claim 1, wherein
the number of the inner shell radial rebars (27) is 320 and the number of the outer shell radial rebars (28) is 448.

4. The nuclear plant according to claims 1 - 3, wherein
muti stages of a radial rebar group (33) consisting of the inner shell radial rebars 827), the outer shell radial rebars (28) and the common radial rebars (29) are arranged vertically changing levels and keeping the same plain view of each stage of the radial rebar group (33).

5. The nuclear plant according to claims 1 - 3, wherein
the outer shell (22) consists of an outer shell upper part (22c) and an outer shell lower part (22b);
the inner diameters of the outer shell upper part (22c) and the outer shell lower part (22b) are the same;
the number of additional outer shell meridian rebars (34) in a radius direction (the number of rows) in the outer shell lower part (22b) is n rows in addition to the number of the outer shell meridian rebars (24) in a radius direction (the number of rows) in the outer shell upper part (22c); and
the outer diameter of the outer shell lower part (22b) is more than 0.2n m larger than the outer diameter of the outer shell upper part (22c), where n is an arbitrary natural number.
